# EUROPEAN PATENT SPECIFICATION

(11) **EP 3 691 005 B1**
(45) Date of publication and mention of the grant of the patent: **13.08.2025**
(21) Application number: 18861640.3
(22) Date of filing: 26.09.2018
(51) Int. Cl.: H01M 4/139, H01M 4/13, H01M 4/62, C08F 218/08, C08F 16/06, C09D 129/04, H01M 10/052, C08F 216/06, H01M 4/04, H01M 10/0525

(54) **BINDER FOR NONAQUEOUS ELECTROLYTE SECONDARY BATTERY ELECTRODE, ELECTRODE MIXTURE FOR NONAQUEOUS ELECTROLYTE SECONDARY BATTERY, ELECTRODE FOR NONAQUEOUS ELECTROLYTE SECONDARY BATTERY, NONAQUEOUS ELECTROLYTE SECONDARY BATTERY, AND ELECTRIC APPARATUS**
BINDER FÜR SEKUNDÄRBATTERIEELEKTRODE MIT WASSERFREIEM ELEKTROLYT, ELEKTRODENMISCHUNG FÜR SEKUNDÄRBATTERIE MIT WASSERFREIEM ELEKTROLYT, ELEKTRODE FÜR SEKUNDÄRBATTERIE MIT WASSERFREIEM ELEKTROLYT, SEKUNDÄRBATTERIE MIT WASSERFREIEM ELEKTROLYT UND ELEKTRISCHE EINRICHTUNG
LIANT POUR ÉLECTRODE DE BATTERIE SECONDAIRE À ÉLECTROLYTE NON AQUEUX, MÉLANGE D'ÉLECTRODE POUR BATTERIE SECONDAIRE À ÉLECTROLYTE NON AQUEUX, ÉLECTRODE POUR BATTERIE SECONDAIRE À ÉLECTROLYTE NON AQUEUX, BATTERIE SECONDAIRE À ÉLECTROLYTE NON AQUEUX, ET APPAREIL ÉLECTRIQUE

(30) Priority: 29.09.2017 JP 2017189254
(43) Date of publication of application: 05.08.2020
(73) Proprietor: Sumitomo Seika Chemicals Co., Ltd., Kako-gun, Hyogo 675-0145 (JP)
(72) Inventor: HASHIMOTO, Shun, Kako-gun Hyogo 675-0145 (JP); HIRABAYASHI, Naoka, Kako-gun Hyogo 675-0145 (JP); KINNO, Masako, Kako-gun Hyogo 675-0145 (JP)
(74) Representative: Mewburn Ellis LLP
(86) International application number: PCT/JP2018/035609
(87) International publication number: WO 2019/065704

(56) References cited:
- WO-A1-2014/057627
- WO-A1-2014/207967
- WO-A1-2017/168947
- WO-A1-2018/168520
- JP-A- 2015 201 267
- JP-A- 2015 201 267
- JP-A- 2016 042 408
- US-A1- 2016 156 024

## Description

### Technical Field

The present invention relates to a binder for a nonaqueous electrolyte secondary battery electrode, an electrode mixture for a nonaqueous electrolyte secondary battery comprising the binder, an electrode for a nonaqueous electrolyte secondary battery comprising the electrode mixture, a nonaqueous electrolyte secondary battery comprising the electrode, and an electrical device comprising the secondary battery.

### Background Art

In recent years, the widespread use of portable electronic devices, such as notebook computers, smartphones, portable game devices, and personal digital assistants (PDAs), has demanded that secondary batteries used as power sources therefor have a smaller size and a higher energy density, in order to reduce the weight of these devices, and enable the use of these devices for longer hours.

Particularly in recent years, the use of secondary batteries as power sources for vehicles, such as electric cars and electric motorcycles, has been increasing.
Secondary batteries that are also used as such power sources for vehicles are required to have not only a higher energy density, but also to be capable of operating over a wide range of temperatures. Thus, various nonaqueous electrolyte secondary batteries have been proposed.

Predominant nonaqueous electrolyte secondary batteries have been heretofore nickel-cadmium batteries, nickel-hydrogen batteries, and the like. However, lithium-ion secondary batteries tend to be more increasingly used to meet the demand for a smaller size and a higher energy density.

An electrode for a nonaqueous electrolyte secondary battery, such as a lithium-ion secondary battery, is usually produced by applying, to a current collector, a battery electrode mixture slurry (hereinafter sometimes simply referred to as "slurry") obtained by mixing an active material (electrode active material) and a conductive assistant into a binder solution in which an electrode binder (hereinafter sometimes simply referred to as "binder") is dissolved in a solvent, or into a slurry in which the binder is dispersed in a dispersion medium, and by removing the solvent or dispersion medium by a method such as drying.

For a lithium-ion secondary battery, for example, a positive electrode is obtained by coating an aluminum foil current collector with a positive electrode mixture slurry in which lithium cobaltate (LiCoO₂) serving as an active material, polyvinylidene fluoride (PVDF) serving as a binder, and carbon black serving as a conductive assistant are dispersed in a dispersion medium, and by drying the slurry.

A negative electrode is obtained by coating a copper foil current collector with a negative electrode mixture slurry in which graphite serving as an active material, carboxymethylcellulose (CMC), styrene-butadiene rubber (SBR), PVDF, or polyimide serving as a binder, and carbon black serving as a conductive assistant are dispersed in water or an organic solvent, and by drying the slurry.

Furthermore, various types of graphite have been studied as negative electrode active materials to achieve an increase in the capacity of lithium-ion secondary batteries. In particular, it is known that artificial graphite varies in crystalline state depending on the raw material, the carbonization temperature, and the like, which causes variations in the energy capacity of the artificial graphite as a negative electrode active material (see Patent Literatures 1 to 3).

JP 2015-201267 A concerns a mixture for the lithium ion secondary battery electrode including an active material for an electrode, a conductive assistant, a binder made of a copolymer of vinyl alcohol and an ethylenic unsaturated carboxylic acid alkali metal neutralization object, and a dispersion assistant. US 2016/0156024 A1 concerns a negative electrode mixture for a nonaqueous electrolyte secondary cell including a negative electrode active material, a conductive assistant and a binder.

### Citation List

### Patent Literatures

Patent Literature 1: JP H8-264180 A
Patent Literature 2: JP H4-188559 A
Patent Literature 3: JP H10-284082 A
Patent Literature 4: WO 2004/049475
Patent Literature 5: JP H10-302799 A

### Summary of Invention

### Technical Problem

When various types of graphite are used as negative electrode active materials, PVDF, which is conventionally used as a binder, needs to be used in a large amount because PVDF has low binding force and low flexibility. The use of a large amount of the binder has a drawback in that the amount of the active material relatively decreases to reduce the battery capacity, and the resistance within the battery increases. Furthermore, because PVDF is soluble only in an organic solvent, other binders that can reduce the environmental load have been suggested (see Patent Literatures 4 and 5). When these binders are used, however, sufficient battery performance cannot be obtained.

Furthermore, the use of styrene-butadiene rubber (SBR) as an aqueous binder that is expected to provide the effect of reducing the environmental load without reducing the binding force has been studied. However, because insulating SBR having rubber properties is present on the surface of the active material, sufficient rate characteristics cannot be obtained, and the resistance within the electrode increases.

Under such circumstances, it is a main object of the present invention to provide an electrode binder that has sufficient binding force and can reduce the resistance of a nonaqueous electrolyte secondary battery.

### Solution to Problem

The present inventors conducted extensive research to solve the above-described problem. As a result, they found that when a binder comprising a copolymer of a vinyl alcohol and an alkali metal-neutralized product of ethylenically unsaturated carboxylic acid; and at least one of poly(meth)acrylic acid and an alkali metal-neutralized product of poly(meth)acrylic acid is used for an electrode of a nonaqueous electrolyte secondary battery, the binder exhibits sufficient binding force, and can reduce the resistance of the nonaqueous electrolyte secondary battery.

The scope of the invention is defined by the appended claims.

In summary, the present invention provides aspects of the invention comprising the following features:
Item 1. A binder for a nonaqueous electrolyte secondary battery electrode comprising a copolymer of a vinyl alcohol and an alkali metal-neutralized product of ethylenically unsaturated carboxylic acid; and at least one of poly(meth)acrylic acid and an alkali metal-neutralized product of poly(meth)acrylic acid, wherein a mass ratio of the copolymer to a total mass of the poly(meth)acrylic acid and the alkali metal-neutralized product of poly(meth)acrylic acid is 95/5 to 30/70.
Item 2. The binder for a nonaqueous electrolyte secondary battery electrode according to item 1, wherein a copolymer composition ratio of the vinyl alcohol to the alkali metal-neutralized product of ethylenically unsaturated carboxylic acid in the copolymer is 95/5 to 5/95 in terms of molar ratio.
Item 3. The binder for a nonaqueous electrolyte secondary battery electrode according to item 1 or 2, wherein the alkali metal-neutralized product of ethylenically unsaturated carboxylic acid is an alkali metal-neutralized product of (meth)acrylic acid.
Item 4. An electrode mixture for a nonaqueous electrolyte secondary battery comprising an electrode active material, a conductive assistant, and the binder for a nonaqueous electrolyte secondary battery electrode according to any one of items 1 to 3.
Item 5. The electrode mixture for a nonaqueous electrolyte secondary battery according to item 4, wherein a content of the binder is 0.5 to 40 parts by mass, based on a total of 100 parts by mass of the electrode active material, the conductive assistant, and the binder.
Item 6. An electrode for a nonaqueous electrolyte secondary battery produced using the electrode mixture for a nonaqueous electrolyte secondary battery according to item 4 or 5.
Item 7. A nonaqueous electrolyte secondary battery comprising the electrode for a nonaqueous electrolyte secondary battery according to item 6.
Item 8. An electrical device comprising the nonaqueous electrolyte secondary battery according to item 7.
Item 9. Use of a binder for a nonaqueous electrolyte secondary battery electrode, the binder comprising a copolymer of a vinyl alcohol and an alkali metal-neutralized product of ethylenically unsaturated carboxylic acid; and at least one of poly(meth)acrylic acid and an alkali metal-neutralized product of poly(meth)acrylic acid, wherein a mass ratio of the copolymer to a total mass of the poly(meth)acrylic acid and the alkali metal-neutralized product of poly(meth)acrylic acid is 95/5 to 30/70.

### Advantageous Effects of Invention

The present invention can provide an electrode binder that has sufficient binding force and can reduce the resistance of a nonaqueous electrolyte secondary battery. The present invention can also provide an electrode mixture for a nonaqueous electrolyte secondary battery comprising the binder, an electrode for a nonaqueous electrolyte secondary battery comprising the electrode mixture, a nonaqueous electrolyte secondary battery comprising the electrode, and an electrical device comprising the secondary battery.

### Description of Embodiments

A binder for a nonaqueous electrolyte secondary battery electrode, an electrode mixture for a nonaqueous electrolyte secondary battery, an electrode for a nonaqueous electrolyte secondary battery, a nonaqueous electrolyte secondary battery, and an electrical device according to the present invention will be hereinafter described in detail.

As used herein, "(meth)acrylic acid" refers to "acrylic acid" and/or "methacrylic acid". The same applies to similar expressions.

### <Binder for Nonaqueous Electrolyte Secondary Battery Electrode>

The binder for a nonaqueous electrolyte secondary battery electrode according to the present invention (hereinafter sometimes referred to as the "binder of the present invention") comprises a copolymer of a vinyl alcohol and an alkali metal-neutralized product of ethylenically unsaturated carboxylic acid; and at least one of poly(meth)acrylic acid and an alkali metal-neutralized product of poly(meth)acrylic acid. When the binder for a nonaqueous electrolyte secondary battery electrode according to the present invention is used for an electrode of a nonaqueous electrolyte secondary battery, the binder exhibits sufficient binding force, and can reduce the resistance of the nonaqueous electrolyte secondary battery.

### [Copolymer of Vinyl Alcohol and Alkali Metal-Neutralized Product of Ethylenically Unsaturated Carboxylic Acid]

The copolymer of the vinyl alcohol and the alkali metal-neutralized product of ethylenically unsaturated carboxylic acid (hereinafter sometimes simply referred to as the "copolymer") refers to a copolymer obtained by copolymerization of a vinyl alcohol and an alkali metal-neutralized product of ethylenically unsaturated carboxylic acid as monomer components. The copolymer can be obtained by, for example, saponifying a precursor obtained by copolymerization of a vinyl ester and an ethylenically unsaturated carboxylic acid ester in a solvent mixture of an aqueous organic solvent and water, in the presence of an alkali including an alkali metal. Specifically, a vinyl alcohol in itself is unstable and cannot be directly used as a monomer; however, when the polymer obtained using a vinyl ester as a monomer is saponified, the resulting copolymer ends up as a copolymer obtained by copolymerization of the vinyl alcohol as a monomer component.

Examples of the vinyl ester include vinyl acetate and vinyl propionate. Vinyl acetate is preferred from the viewpoint of allowing the saponification reaction to proceed easily. A single vinyl ester may be used, or two or more vinyl esters may be used in combination.

Examples of the ethylenically unsaturated carboxylic acid ester include methyl ester, ethyl ester, n-propyl ester, isopropyl ester, n-butyl ester, and t-butyl ester of (meth)acrylic acid. Methyl acrylate and methyl methacrylate are preferred from the viewpoint of allowing the saponification reaction to proceed easily. A single ethylenically unsaturated carboxylic acid ester may be used, or two or more ethylenically unsaturated carboxylic acid esters may be used in combination.

Optionally, any other ethylenically unsaturated monomers copolymerizable with the vinyl ester and the ethylenically unsaturated carboxylic acid ester may be additionally used and copolymerized with them.

As one example of the saponification reaction, a saponification reaction in which a precursor obtained by copolymerization of vinyl acetate/methyl acrylate is 100% saponified with potassium hydroxide is shown below:

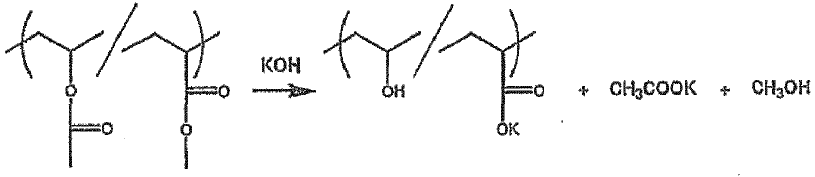

The copolymer of the vinyl alcohol and the alkali metal-neutralized product of ethylenically unsaturated carboxylic acid is a compound obtained by saponifying the ester moiety derived from the monomers of a precursor obtained by random copolymerization of a vinyl ester and an ethylenically unsaturated carboxylic acid ester. The monomers are bonded through C-C covalent bonding. The "copolymer of the vinyl alcohol and the alkali metal-neutralized product of ethylenically unsaturated carboxylic acid" is sometimes simply referred to as the "copolymer", hereinafter. In the formula shown above, "/" denotes random copolymerization.

From the viewpoint of allowing the binder of the present invention to exhibit a more sufficient binding force, and reducing the resistance of a nonaqueous electrolyte secondary battery more favorably, in the precursor obtained by copolymerization of the vinyl ester and the ethylenically unsaturated carboxylic acid ester, the molar ratio of the vinyl ester to the ethylenically unsaturated carboxylic acid ester is preferably 95/5 to 5/95, more preferably 90/10 to 10/90, and still more preferably 80/20 to 20/80. When the molar ratio is 95/5 to 5/95, the retentivity of the binder of the copolymer obtained after saponification is further improved.

Thus, from the viewpoint of allowing the binder of the present invention to exhibit a more sufficient binding force, and reducing the resistance of a nonaqueous electrolyte secondary battery more favorably, in the resulting copolymer of the vinyl alcohol and the alkali metal-neutralized product of ethylenically unsaturated carboxylic acid, the copolymer composition ratio is preferably 95/5 to 5/95, more preferably 90/10 to 10/90, and still more preferably 80/20 to 20/80 in terms of molar ratio. When the molar ratio is 95/5 to 5/95, the retentivity of the binder in the electrode mixture is further improved.

From the viewpoint of allowing the binder of the present invention to exhibit a more sufficient binding force, and reducing the resistance of a nonaqueous electrolyte secondary battery more favorably, the total content of the vinyl ester and the ethylenically unsaturated carboxylic acid ester, based on the total mass (100% by mass) of the monomers that form the copolymer, is preferably 5% by mass or more, more preferably 20 to 95% by mass, and still more preferably 40 to 95% by mass.

The alkali metal-neutralized product of ethylenically unsaturated carboxylic acid according to the present invention is preferably an alkali metal-neutralized product of (meth)acrylic acid, from the viewpoint of easy handling during the production. Examples of the alkali metal in the alkali metal-neutralized product of ethylenically unsaturated carboxylic acid include lithium, sodium, potassium, rubidium, and cesium. Potassium and sodium are preferred. Particularly preferably, the alkali metal-neutralized product of ethylenically unsaturated carboxylic acid is at least one selected from the group consisting of sodium-neutralized product of acrylic acid, potassium-neutralized product of acrylic acid, sodium-neutralized product of methacrylic acid, and potassium-neutralized product of methacrylic acid.

From the viewpoint of obtaining a precursor in powder form, the precursor obtained by copolymerization of the vinyl ester and the ethylenically unsaturated carboxylic acid ester (hereinafter sometimes simply referred to as the "precursor") is preferably a precursor obtained by a suspension polymerization method in which monomers mainly including the vinyl ester and the ethylenically unsaturated carboxylic acid ester, being suspended in an aqueous solution of a dispersing agent containing a polymerization catalyst, are polymerized into polymer particles.

Examples of the polymerization catalyst include organic peroxides, such as benzoyl peroxide and lauryl peroxide, and azo compounds, such as azobisisobutyronitrile and azobisdimethylvaleronitrile. In particular, lauryl peroxide is preferred.

The content of the polymerization catalyst is preferably 0.01 to 5% by mass, more preferably 0.05 to 3% by mass, and still more preferably 0.1 to 3% by mass, based on the total mass (100% by mass) of the monomers. If the content is less than 0.01% by mass, the polymerization reaction may not be completed, whereas if the content is above 5% by mass, the binding effect of the finally obtained copolymer as a binder may not be sufficient.

Examples of the dispersing agent for use in carrying out polymerization include water-soluble polymers, such as polyvinyl alcohol (partially saponified polyvinyl alcohol or fully saponified polyvinyl alcohol), poly(meth)acrylic acid and a salt thereof, polyvinyl pyrrolidone, methylcellulose, carboxymethyl cellulose, hydroxyethyl cellulose, and hydroxypropyl cellulose; and water-insoluble inorganic compounds, such as calcium phosphate and magnesium silicate. These dispersing agents may be used alone or in combination.

The content of the dispersing agent, which may vary depending on the type of the monomers used, is preferably 0.01 to 10% by mass, and more preferably 0.05 to 5% by mass, based on the total mass (100% by mass) of the monomers.

A water-soluble salt of an alkali metal, an alkaline earth metal, or the like may also be added to adjust the surfactant effect of the dispersing agent. Examples of the water-soluble salt include sodium chloride, potassium chloride, calcium chloride, lithium chloride, sodium sulfate, potassium sulfate, disodium hydrogen phosphate, dipotassium hydrogen phosphate, trisodium phosphate, and tripotassium phosphate. These water-soluble salts may be used alone or in combination.

The content of the water-soluble salt is usually 0.01 to 10% by mass, based on the mass of the aqueous solution of the dispersing agent.

The temperature at which the monomers are polymerized is preferably -20 to +20°C, and more preferably -10 to +10°C, relative to the 10-hour half-life temperature of the polymerization catalyst. If the temperature at which the monomers are polymerized is less than -20°C relative to the 10-hour half-life temperature of the polymerization catalyst, the polymerization reaction may not be completed, whereas if the temperature is above +20°C, the binding effect of the resulting copolymer of the vinyl alcohol and the alkali metal-neutralized product of ethylenically unsaturated carboxylic acid as a binder may not be sufficient.

The time for which the monomers are polymerized is usually from several to several tens of hours.

After the completion of the polymerization reaction, the precursor is separated by a method such as centrifugation or filtration, and obtained in the form of a hydrous cake. The resulting precursor in the form of a hydrous cake may be subjected to the saponification reaction, either as is, or optionally after being dried.

The number average molecular weight of the precursor may be determined using a molecular weight-measuring apparatus equipped with a GFC column (OH pak manufactured by Shodex), for example, using a polar solvent, such as DMF. Examples of the molecular weight-measuring apparatus include 2695 and an RI detector 2414 manufactured by Waters Corporation.

The number average molecular weight of the precursor is preferably 10,000 to 10,000,000, and more preferably 50,000 to 5,000,000. When the number average molecular weight of the precursor is 10,000 to 10,000,000, the binding force of the binder is improved; moreover, particularly when the binder is used as an aqueous binder, the thickness can be readily adjusted.

The saponification reaction can be carried out, for example, in an aqueous organic solvent only or a solvent mixture of an aqueous organic solvent and water, in the presence of an alkali including an alkali metal. The alkali including an alkali metal to be used in the saponification reaction may be a known alkali. The alkali is preferably an alkali metal hydroxide, and more preferably sodium hydroxide or potassium hydroxide from the viewpoint of high reactivity.

The content of the alkali is preferably 60 to 140 mol%, and more preferably 80 to 120 mol%, based on the total number of moles of the monomers. If the alkali content is less than 60 mol%, the saponification may be insufficient, whereas if the alkali content is above 140 mol%, a commensurate effect cannot be obtained, which is uneconomical. The degree of saponification in the saponification reaction of the precursor is preferably 90 to 100%, and more preferably 95 to 100%. When the degree of saponification is 90% or more, the solubility in water can be improved.

In the copolymer of the present invention, substantially no free carboxylic acid (COOH) group derived from the ethylenically unsaturated carboxylic acid ester is present, regardless of the alkali content. The absence of the carboxylic acid group imparts an appropriate viscosity to the resulting electrode mixture in slurry form, which can improve the ease of application and storage stability.

The solvent for the saponification reaction is preferably an aqueous organic solvent only or a solvent mixture of an aqueous organic solvent and water. Examples of the aqueous organic solvent include lower alcohols, such as methanol, ethanol, n-propanol, isopropanol, n-butanol, and t-butanol; ketones, such as acetone and methyl ethyl ketone; and mixtures thereof. In particular, lower alcohols are preferred, and methanol and ethanol are particularly preferred in that a copolymer having excellent thickening effect and excellent resistance to mechanical shear is obtained. A single aqueous organic solvent may be used, or two or more aqueous organic solvents may be used in combination.

When the solvent mixture of an aqueous organic solvent and water is used, the mass ratio (aqueous organic solvent:water) is preferably 2:8 to 10:0, and more preferably 3:7 to 8:2. If the mass ratio falls outside the range of 2:8 to 10:0, the solvent compatibility of the precursor or the solvent compatibility of the copolymer after saponification may be insufficient, and the saponification reaction may not proceed sufficiently. If the ratio of the aqueous organic solvent is less than 2:8, the viscosity tends to increase during the saponification reaction, which makes industrial production of the copolymer difficult. When the precursor in the form of a hydrous cake is subjected to the saponification reaction as is, the mass ratio of the solvent mixture includes the water in the precursor in the form of a hydrous cake.

The temperature during the saponification reaction of the precursor is preferably 20 to 80°C, and more preferably 20 to 60°C. If the saponification reaction is carried out at a temperature lower than 20°C, the reaction may not be completed, whereas if the temperature is above 80°C, the viscosity in the reaction system may increase, which makes stirring difficult.

The saponification reaction time is usually about several hours.

At the completion of the saponification reaction, usually, a dispersion of the copolymer in paste or slurry form is produced. The dispersion is subjected to solid-liquid separation using a method such as centrifugation or filtration, and the resulting product is washed with a lower alcohol, such as methanol, and dried. As a result, the copolymer of the vinyl alcohol and the alkali metal-neutralized product of ethylenically unsaturated carboxylic acid can be obtained as single spherical particles or agglomerated particles formed by agglomeration of spherical particles.

After the saponification reaction, the copolymer may be subjected to an acid treatment using an acid, for example, an inorganic acid, such as hydrochloric acid, sulfuric acid, phosphoric acid, or nitric acid, or an organic acid, such as formic acid, acetic acid, oxalic acid, or citric acid, and then treated using any alkali metal, such as lithium hydroxide, sodium hydroxide, potassium hydroxide, rubidium hydroxide, cesium hydroxide, or francium hydroxide. As a result, a different type (that is, with a different alkali metal) of the copolymer of the vinyl alcohol and the alkali metal-neutralized product of ethylenically unsaturated carboxylic acid can be obtained.

Usually, the liquid-containing copolymer is preferably dried under normal pressure or reduced pressure at a temperature of 30 to 120°C. The drying time, which may vary depending on the pressure and the temperature during drying, is usually from several to several tens of hours.

From the viewpoint of allowing the binder of the present invention to exhibit a more sufficient binding force, and reducing the resistance of a nonaqueous electrolyte secondary battery more favorably, the volume average particle diameter of the resulting copolymer of the vinyl alcohol and the alkali metal-neutralized product of ethylenically unsaturated carboxylic acid is preferably 1 to 200 µm, and more preferably 10 to 100 µm. When the volume average particle diameter is 1 µm or more, a more preferred binding effect is obtained, and when the volume average particle diameter is 200 µm or less, the thickening liquid is more homogeneous, and a preferred binding effect is obtained. The volume average particle diameter of the copolymer represents the value measured using a laser diffraction particle size analyzer (SALD-7100 manufactured by Shimadzu Corporation) attached with a batch cell (SALD-BC manufactured by Shimadzu Corporation), and also using 2-propanol or methanol as a dispersion solvent.

When the copolymer obtained by drying the liquid-containing copolymer has a volume average particle diameter above 200 µm, the volume average particle diameter can be adjusted to 1 µm or more and 200 µm or less, by pulverizing the copolymer using a known pulverization method, such as mechanical milling.

Mechanical milling is a method in which an external force, such as impact, tension, friction, compression, or shear, is applied to the resulting copolymer. Examples of apparatuses therefor include a tumbling mill, a vibration mill, a planetary mill, a rocking mill, a horizontal mill, an attritor mill, a jet mill, a grinding machine, a homogenizer, a fluidizer, a paint shaker, and a mixer. For example, a planetary mill pulverizes or mixes the copolymer by means of mechanical energy generated by rotating and revolving a container containing the copolymer and balls. With this method, the copolymer is pulverized to the order of nanometers.

Concerning the thickening effect of the copolymer of the vinyl alcohol and the alkali metal-neutralized product of ethylenically unsaturated carboxylic acid according to the present invention, the viscosity of an aqueous solution containing 1% by mass of the copolymer (1% by mass aqueous solution) is preferably 20 to 10,000 mPa·s, more preferably 50 to 10,000 mPa·s, and still more preferably 50 to 5,000 mPa·s, from the viewpoint of the ease of applying the resulting electrode mixture. When the viscosity is 20 mPa·s or more, an electrode mixture in slurry form having a preferred viscosity can be obtained, and ease of application is achieved. Furthermore, good dispersibility of the active material and the conductive assistant in the electrode mixture is achieved. When the viscosity is 10,000 mPa·s or less, the viscosity of the resulting electrode mixture is not excessively high, and the electrode mixture can be more easily applied to a current collector thinly and evenly. The viscosity of the 1% by mass aqueous solution represents the value measured using a BROOKFIELD rotational viscometer (model number: DV-I+), under spindle No. 5 and 50 rpm (liquid temperature: 25°C).

From the viewpoint of allowing the binder of the present invention to exhibit a more sufficient binding force, and reducing the resistance of a nonaqueous electrolyte secondary battery more favorably, the content of the copolymer of the vinyl alcohol and the alkali metal-neutralized product of ethylenically unsaturated carboxylic acid in the binder of the present invention is preferably 5% by mass or more, more preferably 20% by mass or more and 95% by mass or less, and still more preferably 40% by mass or more and 95% by mass or less.

### [Poly(meth)acrylic Acid and Alkali Metal-Neutralized Product of Poly(meth)acrylic Acid]

In addition to the copolymer of the vinyl alcohol and the alkali metal-neutralized product of ethylenically unsaturated carboxylic acid, the binder of the present invention comprises at least one of poly(meth)acrylic acid and an alkali metal-neutralized product of poly(meth)acrylic acid.

The poly(meth)acrylic acid is a polymer of (meth)acrylic acid, and the alkali metal-neutralized product of poly(meth)acrylic acid is a metal-neutralized product of the polymer of (meth)acrylic acid.

From the viewpoint of allowing the binder of the present invention to exhibit a more sufficient binding force, and reducing the resistance of a nonaqueous electrolyte secondary battery more favorably, the poly(meth)acrylic acid is preferably polyacrylic acid, and the alkali metal-neutralized product of poly(meth)acrylic acid is preferably an alkali metal-neutralized product of polyacrylic acid.

From the viewpoint of allowing the binder of the present invention to exhibit a more sufficient binding force, and reducing the resistance of a nonaqueous electrolyte secondary battery more favorably, the number average molecular weight of each of the poly(meth)acrylic acid and the alkali metal-neutralized product of poly(meth)acrylic acid is preferably 10,000 to 10,000,000, and more preferably 50,000 to 5,000,000, also from the viewpoint of achieving a viscosity that allows easy handling of the electrode mixture during application. Each of the poly(meth)acrylic acid and the alkali metal-neutralized product of poly(meth)acrylic acid may be crosslinked.

The number average molecular weight of each of the poly(meth)acrylic acid and the alkali metal-neutralized product of poly(meth)acrylic acid represents the value measured using a molecular weight-measuring apparatus equipped with a GFC column, as with the number average molecular weight of the precursor of the copolymer.

Each of the poly(meth)acrylic acid and the alkali metal-neutralized product of poly(meth)acrylic acid can be produced using a known method. Polyacrylic acid, for example, can be produced by polymerizing acrylic acid in the presence of a catalyst. Polyacrylic acid may be a commercial product, for example, the product name "JURYMER" series (manufactured by Toagosei Co., Ltd.) or the product name "AQUALIC" series (manufactured by Nippon Shokubai Co., Ltd.). The alkali metal-neutralized product of poly(meth)acrylic acid can be produced by, for example, neutralizing poly(meth)acrylic acid with an alkali metal salt in the presence of a catalyst. The alkali metal-neutralized product of polyacrylic acid may be a commercial product, for example, the product name "ARON" series (manufactured by Toagosei Co., Ltd.) or the product name "AQUALIC" series (manufactured by Nippon Shokubai Co., Ltd.).

In the binder of the present invention, a single type of poly(meth)acrylic acid may be used, or two or more types of poly(meth)acrylic acid may be used in combination. Similarly, a single alkali metal-neutralized product of poly(meth)acrylic acid may be used, or two or more alkali metal-neutralized products of poly(meth)acrylic acid may be used in combination. The poly(meth)acrylic acid and the alkali metal-neutralized product of poly(meth)acrylic acid may be used in combination.

From the viewpoint of allowing the binder of the present invention to exhibit a more sufficient binding force, and reducing the resistance of a nonaqueous electrolyte secondary battery more favorably, the total content of the poly(meth)acrylic acid and the alkali metal-neutralized product of poly(meth)acrylic acid in the binder of the present invention is preferably 2.5 to 70% by mass, more preferably 7.5 to 65% by mass, and still more preferably 12.5 to 60% by mass, based on the total mass of the binder. When the content of the poly(meth)acrylic acid and the alkali metal-neutralized product of poly(meth)acrylic acid is 2.5% by mass or more, the resistance in an electrode tends to be further reduced. On the other hand, when the content of polyacrylic acid and the alkali metal-neutralized product of polyacrylic acid is 70% by mass or less, deterioration of the cycle lifetime characteristics due to insufficient binding force tends to be prevented.

From the viewpoint of allowing the binder of the present invention to exhibit a more sufficient binding force, and reducing the resistance of a nonaqueous electrolyte secondary battery more favorably, the mass ratio of the copolymer to the total mass of the poly(meth)acrylic acid and the alkali metal-neutralized product of poly(meth)acrylic acid [the copolymer/(total mass of the poly(meth)acrylic acid and the alkali metal-neutralized product of poly(meth)acrylic acid)] in the binder of the present invention is 95/5 to 30/70, preferably 95/5 to 35/65, and more preferably 95/5 to 40/60. When the mass ratio is 95/5 to 30/70, the resistance in an electrode tends to be further reduced, and deterioration of the cycle lifetime characteristics due to insufficient binding force tends to be prevented.

### [Other Components]

The binder for a nonaqueous electrolyte secondary battery electrode according to the present invention may contain other components, in addition to the copolymer of the vinyl alcohol and the alkali metal-neutralized product of ethylenically unsaturated carboxylic acid, and the poly(meth)acrylic acid and the alkali metal-neutralized product of poly(meth)acrylic acid. Examples of the other components include components blended into a known binder for a nonaqueous electrolyte secondary battery electrode. Specific examples of the other components include carboxymethyl cellulose (CMC), sodium alginate, polyimide (PI), polyamide, polyamideimide, polyacryl, styrene-butadiene rubber (SBR), and ethylene-vinyl acetate copolymer (EVA). In particular, sodium alginate, polyamide, polyamideimide, and polyimide are suitably used. The other components may be used alone or in admixture.

The binder for a nonaqueous electrolyte secondary battery electrode according to the present invention may not contain a polyalkylene oxide. That is, in one embodiment, the binder for a nonaqueous electrolyte secondary battery electrode according to the present invention does not contain a polyalkylene oxide (the polyalkylene oxide content is 0% by mass). Examples of the polyalkylene oxide include polyethylene oxide, polypropylene oxide, polybutylene oxide, ethylene oxide-propylene oxide copolymer, ethylene oxide-butylene oxide copolymer, and propylene oxide-butylene oxide copolymer.

From the viewpoint of allowing the binder of the present invention to exhibit a more sufficient binding force, and reducing the resistance of a nonaqueous electrolyte secondary battery more favorably, the content of the other components in the binder of the present invention is preferably less than 80% by mass, more preferably 50% by mass or less, and still more preferably 20% by mass or less.

From the viewpoint of allowing the binder of the present invention to exhibit a more sufficient binding force, and reducing the resistance of a nonaqueous electrolyte secondary battery more favorably, the total content of the copolymer of the vinyl alcohol and the alkali metal-neutralized product of ethylenically unsaturated carboxylic acid, and the poly(meth)acrylic acid and the alkali metal-neutralized product of poly(meth)acrylic acid, in the binder of the present invention, is preferably 20 to 100% by mass, based on the total mass of the binder.

The binder for a nonaqueous electrolyte secondary battery electrode according to the present invention can be suitably used as an aqueous binder (that is, an aqueous binder for a nonaqueous electrolyte secondary battery electrode).

### <Electrode Mixture for Nonaqueous Electrolyte Secondary Battery>

The electrode mixture for a nonaqueous electrolyte secondary battery according to the present invention is an electrode mixture that is used to produce an electrode for a nonaqueous electrolyte secondary battery. The electrode mixture comprises, as essential components, the binder for a nonaqueous electrolyte secondary battery electrode according to the present invention, an electrode active material (a positive electrode active material and a negative electrode active material), and a conductive assistant.

From the viewpoint of exhibiting a more sufficient binding force, and reducing the resistance of a nonaqueous electrolyte secondary battery more favorably, the content of the binder of the present invention is preferably 0.5 to 40 parts by mass, more preferably 1 to 25 parts by mass, and still more preferably 1.5 to 10 parts by mass, based on a total of 100 parts by mass of the electrode active material, the conductive assistant, and the binder. From the same viewpoint, the content of the binder of the present invention in the electrode mixture of the present invention is preferably 0.5 to 40% by mass, more preferably 1 to 25% by mass, and still more preferably 1.5 to 10% by mass. When the binder content is 0.5% by mass or more, deterioration of the cycle lifetime characteristics due to insufficient binding force tends to be prevented, and agglomeration due to an insufficient viscosity of the slurry tends to be prevented. On the other hand, when the binder content is 40% by mass or less, a high capacity of a battery upon charge/discharge tends to be achieved.

The electrode mixture of the present invention can be produced using the binder of the present invention, in accordance with a known method. For example, the electrode mixture can be produced by adding the conductive assistant, the binder of the present invention, a dispersion assistant (optional), and water to the electrode active material, to produce a slurry in paste form. The timing for adding water is not specifically limited. Water may be added by dissolving the binder of the present invention in water in advance. Alternatively, water may be added after the electrode active material, the conductive assistant, a dispersion assistant (optional), and the binder of the present invention are mixed in a solid state.

The content of the water is preferably 40 to 2,000 parts by mass, and more preferably 50 to 1,000 parts by mass, for example, based on a total of 100 parts by mass of the electrode active material, the conductive assistant, and the binder of the present invention. When the water content is in the above-defined range, the handleability of the electrode mixture (slurry) of the present invention tends to be further improved.

### [Positive Electrode Active Material]

The positive electrode active material may be a positive electrode active material used in this technical field. For example, lithium iron phosphate (LiFePO₄), lithium manganese phosphate (LiMnPO₄), lithium cobalt phosphate (LiCoPO₄), iron pyrophosphate (Li₂FeP₂O₇), lithium cobaltate (LiCoO₂), spinel-type lithium manganese composite oxide (LiMn₂O₄), lithium manganese composite oxide (LiMnO₂), lithium nickel composite oxide (LiNiO₂), lithium niobium composite oxide (LiNbO₂), lithium iron composite oxide (LiFeO₂), lithium magnesium composite oxide (LiMgO₂), lithium calcium composite oxide (LiCaO₂), lithium copper composite oxide (LiCuO₂), lithium zinc composite oxide (LiZnO₂), lithium molybdenum composite oxide (LiMoO₂), lithium tantalum composite oxide (LiTaO₂), lithium tungsten composite oxide (LiWO₂), lithium-nickel-cobalt-aluminum composite oxide (LiNi_{0.8}Co_{0.15}Al_{0.05}O₂), lithium-nickel-cobalt-manganese composite oxide ((LiNiₓCo_{y}Mn_{1-x-y}O₂) 0 < x < 1, 0 < y < 1, x + y < 1), lithium-rich nickel-cobalt-manganese composite oxide, nickel manganese oxide (LiNi_{0.5}Mn_{1.5}O₄), manganese oxide (MnO₂), a vanadium-based oxide, a sulfur-based oxide, a silicate-based oxide, and the like are suitably used. These positive electrode active materials may be used alone or in combination.

### [Negative Electrode Active Material]

The negative electrode active material may be a negative electrode active material used in this technical field. For example, a material capable of intercalation and deintercalation of a large number of lithium ions, such as a carbon material, silicon (Si), tin (Sn), or lithium titanate, can be used. Any of such materials, which may be in the form of any of a single material, an alloy, a compound, a solid solution, and a composite active material containing a silicon-containing material or a tin-containing material, can exhibit the effects of the present embodiment. The carbon material may be crystalline carbon or amorphous carbon, for example. Examples of crystalline carbon include graphite such as natural or artificial graphite in an amorphous, platelike, flake, spherical, or fibrous form. Examples of amorphous carbon include soft carbon (graphitizable carbon) or hard carbon (non-graphitizable carbon), mesophase pitch carbide, and calcined coke. The silicon-containing material may be Si, SiOx (0.05 < x< 1.95), or an alloy, a compound, or a solid solution thereof obtained by partially substituting Si with at least one element selected from the group consisting of B, Mg, Ni, Ti, Mo, Co, Ca, Cr, Cu, Fe, Mn, Nb, Ta, V, W, Zn, C, N, and Sn. These materials may be referred to as silicon or the silicon compound. The tin-containing material may be Ni₂Sn₄, Mg₂Sn, SnOₓ (0 < x < 2), SnO₂, SnSiO₃, or LiSnO, for example. These materials may be used alone or in combination. In particular, the negative electrode active material is preferably graphite. Even when graphite is used as the negative electrode active material, the use of the binder of the present invention allows the binder to exhibit sufficient binding force, and can favorably reduce the resistance of a nonaqueous electrolyte secondary battery.

The negative electrode active material may be a composite obtained by mixing silicon or the silicon compound as a first negative electrode active material and the carbon material as a second negative electrode active material. In this case, the mixture ratio of the first and second negative electrode active materials is preferably 5/95 to 95/5 in terms of mass ratio. The carbon material may be any carbon material used in this technical field, and representative examples include crystalline carbon and amorphous carbon as mentioned above.

The method for manufacturing the negative electrode active material may be any method that allows the first and second negative electrode active materials to be homogeneously dispersed in the production of the active material composite obtained by mixing these active materials. Specifically, the method for manufacturing the negative electrode active material may be, for example, a method in which the first and second negative electrode active materials are mixed in a ball mill. As another example, the method for manufacturing the negative electrode active material may be a method in which a precursor of the second negative electrode active material is deposited on the surface of the particles of the first negative electrode active material, and then carbonized by a heat-treatment method. The precursor of the second negative electrode active material may be a carbon precursor that can be formed into a carbon material by heat treatment. Examples of the precursor include glucose, citric acid, pitch, tar, and binder materials (such as polyvinylidene fluoride, carboxymethylcellulose, acrylic resin, sodium polyacrylate, sodium alginate, polyimide, polytetrafluoroethylene, polyamide, polyamideimide, polyacryl, styrene-butadiene rubber, polyvinyl alcohol, and ethylene-vinyl acetate copolymer). These negative electrode active materials are readily commercially available.

### [Conductive Assistant]

The conductive assistant may be a conductive assistant used in this technical field, and is preferably carbon powder. Examples of the carbon powder include acetylene black (AB), Ketjen black (KB), graphite, carbon fibers, carbon tubes, graphene, amorphous carbon, hard carbon, soft carbon, glassy carbon, carbon nanofibers, and carbon nanotubes (CNTs).

The content of the conductive assistant is preferably 0.1 to 30% by mass, more preferably 0.5 to 10% by mass, and still more preferably 2 to 5% by mass, based on a total of 100 parts by mass of the electrode active material, the conductive assistant, and the binder. If the conductive assistant content is less than 0.1% by mass, the conductivity of the electrode may not be sufficiently improved. If the conductive assistant content is above 30% by mass, the proportion of the electrode active material relatively decreases, which makes it difficult to achieve a high capacity of a battery upon charge/discharge. Moreover, the amount of the binder to be used may increase because the conductive assistant is smaller in size, and thus, is larger in surface area than the electrode active material.

### [Dispersion Assistant]

The electrode mixture of the present invention may further contain a dispersion assistant. The inclusion of the dispersion assistant improves the dispersibility of the electrode active material and the conductive assistant in the electrode mixture. The dispersion assistant is preferably an organic acid that is soluble in an aqueous solution at pH 7 to 13, and has a molecular weight of 100,000 or less. Among these organic acids, preferred is an organic acid containing carboxyl group(s) and at least one selected from the group consisting of a hydroxy group, an amino group, and an imino group. Specific examples of the organic acid include compounds having a carboxyl group and a hydroxy group, such as lactic acid, tartaric acid, citric acid, malic acid, glycolic acid, tartronic acid, glucuronic acid, and humic acid; compounds having a carboxyl group and an amino group, such as glycine, alanine, phenylalanine, 4-aminobutyric acid, leucine, isoleucine, and lysine; compounds having a plurality of carboxyl groups and an amino group, such as glutamic acid and aspartic acid; compounds having a carboxyl group and an imino group, such as proline, 3-hydroxyproline, 4-hydroxyproline, and pipecolic acid; and compounds having a carboxyl group and a functional group other than a hydroxy group and an amino group, such as glutamine, asparagine, cysteine, histidine, and tryptophan. In particular, glucuronic acid, humic acid, glycine, aspartic acid, and glutamic acid are preferred from the viewpoint of availability.

When the binder of the present invention is an aqueous binder, the molecular weight of the dispersion assistant is preferably 100,000 or less, from the viewpoint of the solubility in water. If the molecular weight is above 100,000, the molecular hydrophobicity will increase, which may impair the homogeneity of the slurry.

### <Electrode for Nonaqueous Electrolyte Secondary Battery>

The electrode for a nonaqueous electrolyte secondary battery according to the present invention can be produced using the electrode mixture of the present invention (that is, using the electrode for a nonaqueous electrolyte secondary battery according to the present invention), in accordance with a method used in this technical field. For example, the electrode for a nonaqueous electrolyte secondary battery according to the present invention can be produced by providing the electrode mixture on a current collector. More specifically, it can be produced by, for example, applying the electrode mixture onto a current collector (and optionally drying).

When the electrode of the present invention is a positive electrode, the material constituting the current collector may be, for example, a conductive material such as C, Cu, Ni, Fe, V, Nb, Ti, Cr, Mo, Ru, Rh, Ta, W, Os, Ir, Pt, Au, or AI, or an alloy containing two or more of these conductive materials (such as stainless steel). The current collector may be a conductive material plated with a different conductive material (such as Fe plated with Cu). From the viewpoint of having high electrical conductivity, and having excellent stability in an electrolytic solution and excellent oxidation resistance, the material constituting the current collector is preferably Co, Ni, or stainless steel, for example. Cu or Ni is preferred from the viewpoint of the material cost.

When the electrode of the present invention is a negative electrode, the material constituting the current collector may be, for example, a conductive material such as C, Ti, Cr, Mo, Ru, Rh, Ta, W, Os, Ir, Pt, Au, or Al, or an alloy containing two or more of these conductive materials (such as stainless steel). From the viewpoint of having high electrical conductivity, and having excellent stability in an electrolytic solution and excellent oxidation resistance, the material constituting the current collector is preferably C, Al, or stainless steel, for example. Al is preferred from the viewpoint of the material cost.

The shape of the current collector may be, for example, a foil-like substrate or a three-dimensional substrate. The use of a three-dimensional substrate (such as a metal foam, a mesh, a woven fabric, a nonwoven fabric, or an expanded substrate) provides an electrode having a higher capacity density, and achieves good high-rate charge/discharge characteristics.

### <Nonaqueous Electrolyte Secondary Battery>

Using the electrode for a nonaqueous electrolyte secondary battery according to the present invention, the nonaqueous electrolyte secondary battery according to the present invention (nonaqueous electrolyte secondary battery comprising at least the electrode for a nonaqueous electrolyte secondary battery according to the present invention) can be produced. The nonaqueous electrolyte secondary battery according to the present invention may comprise the electrode for a nonaqueous electrolyte secondary battery according to the present invention as either one of or both a positive electrode and a negative electrode. The nonaqueous electrolyte secondary battery is preferably a lithium-ion secondary battery. The method for producing the nonaqueous electrolyte secondary battery according to the present invention may be a common method used in this technical field.

In particular, when the nonaqueous electrolyte secondary battery according to the present invention is a lithium-ion secondary battery, which contains lithium ions, the electrolyte is preferably a lithium salt. Examples of the lithium salt include lithium hexafluorophosphate, lithium perchlorate, lithium tetrafluoroborate, lithium trifluoromethanesulfonate, and lithium trifluoromethanesulfonimide. A single electrolyte may be used, or two or more electrolytes may be used in combination.

The electrolytic solution for the battery may be, for example, propylene carbonate, ethylene carbonate, dimethyl carbonate, diethyl carbonate, or γ-butyrolactone. A single electrolytic solution may be used, or two or more electrolytic solutions may be used in combination. In particular, the electrolytic solution is preferably propylene carbonate alone, a mixture of ethylene carbonate and diethyl carbonate, or γ-butyrolactone alone. In the mixture of ethylene carbonate and diethyl carbonate, the mixture ratio can be adjusted as desired such that the ratio of one component falls within the range of 10 to 90% by volume.

### <Electrical Device>

The electrical device according to the present invention is an electrical device comprising at least the nonaqueous electrolyte secondary battery according to the present invention. That is, the electrical device according to the present invention is an electrical device that uses at least the nonaqueous electrolyte secondary battery according to the present invention as a power source.

Examples of the electrical device include air-conditioners, washing machines, TV sets, refrigerators, personal computers, tablets, smartphones, PC keyboards, monitors, printers, mice, hard disks, PC peripheral devices, irons, clothes dryers, transceivers, blowers, music recorders, music players, ovens, microwave ovens, warm air heaters, car navigators, flashlights, humidifiers, portable karaoke systems, dry cells, air cleaners, game machines, sphygmomanometers, coffee mills, coffee makers, *kotatsu*, copying machines, disc changers, radios, shavers, juicers, shredders, water purifiers, lighting equipment, dish dryers, electric rice cookers, trouser presses, cleaners, weight scales, electric carpets, electric rice cookers, electric pots, electronic dictionaries, electronic organizers, electromagnetic cookers, electric calculators, electric carts, electric wheelchairs, electric tools, electric toothbrushes, heating pads, clocks, intercoms, air circulators, electric bug killers, hot plates, toasters, water heaters, mills, soldering irons, video cameras, videocassette recorders, facsimiles, futon dryers, mixers, sewing machines, rice cake makers, water coolers, electronic musical instruments, motorcycles, toys, lawn mowers, bicycles, automobiles, hybrid cars, plug-in hybrid cars, railroads, ships, airplanes, and emergency storage batteries.

### Examples

The present invention will be hereinafter described more specifically with examples, although the present invention is in no way limited to these examples.

### <Production of Copolymer A>

A copolymer A was produced by the following steps 1 to 3:

### (Step 1: Synthesis of Precursor Obtained by Copolymerization of Vinyl Ester and Ethylenically Unsaturated Carboxylic Acid Ester (Precursor))

In a 2-L reaction vessel equipped with a stirrer, a thermometer, a N₂ gas inlet tube, a reflux condenser, and a dropping funnel, 768 g of water and 12 g of anhydrous sodium sulfate were placed, and N₂ gas was blown into the reaction vessel to deoxidize the system. Subsequently, 1 g of partially saponified polyvinyl alcohol (degree of saponification: 88%) and 1 g of lauryl peroxide were placed in the reaction vessel, and the inside temperature was increased to 60°C; thereafter, 104 g (1.209 mol) of methyl acrylate and 155 g (1.802 mol) of vinyl acetate were added dropwise through the dropping funnel over 4 hours. Then, the inside temperature was maintained at 65°C for 2 hours. Next, the solids were filtered off to obtain 288 g of a precursor (water content: 10.4% by mass). The precursor was dissolved in DMF and then filtered through a filter, and the molecular weight of the precursor in the filtrate was measured using a molecular weight-measuring apparatus (2695 and an RI detector 2414 manufactured by Waters Corporation). The number average molecular weight of the precursor calculated relative to standard polystyrene was 1,880,000.

### (Step 2: Synthesis of Copolymer of Vinyl Alcohol and Alkali Metal-Neutralized Product of Ethylenically Unsaturated Carboxylic Acid (Copolymer))

In a reaction vessel similar to that in step 1, 450 g of methanol, 420 g of water, 132 g (3.3 mol) of sodium hydroxide, and 288 g of the precursor (water content: 10.4% by mass) obtained in step 1 were placed, and a saponification reaction was carried out with stirring at 30°C for 3 hours. After the completion of the saponification reaction, the resulting copolymer was washed with methanol, filtered, and dried at 70°C for 6 hours to obtain 193 g of a vinyl ester/ethylenically unsaturated carboxylic acid ester copolymer (the copolymer of the vinyl alcohol and the alkali metal-neutralized product of ethylenically unsaturated carboxylic acid; alkali metal: sodium; degree of saponification: 98.8%). The volume average particle diameter of the copolymer was 180 µm.

### (Step 3: Pulverization of Copolymer of Vinyl Alcohol and Alkali Metal-Neutralized Product of Ethylenically Unsaturated Carboxylic Acid (Copolymer))

193 g of the copolymer obtained in step 2 was pulverized in a jet mill (LJ manufactured by Nippon Pneumatic Mfg. Co., Ltd.) to obtain 173 g of the copolymer (copolymer A) in the form of a micropowder. The particle diameter of the copolymer A was measured using a laser diffraction particle size analyzer (SALD-7100 manufactured by Shimadzu Corporation). As a result, the volume average particle diameter of the copolymer A was 39 µm.

### <Production of Binder, Electrode Mixture, and Electrode>

### (Example 1)

2.7 parts by mass of the copolymer obtained above and 0.7 part by mass of sodium polyacrylate (ARON A-20L manufactured by Toagosei Co., Ltd.; concentration in the aqueous solution: 43% by mass; number average molecular weight: 500,000) were dissolved in 49.6 parts by mass of water to obtain an aqueous solution of a binder (binder composition). Next, 96.5 parts by mass of artificial graphite (MAG-D manufactured by Hitachi Chemical Co., Ltd.) as an electrode active material and 0.5 part by mass of acetylene black (AB) (DENKA BLACK (registered trademark) manufactured by Denki Kagaku Kogyo Kabushiki Kaisha) as a conductive assistant were added to the aqueous binder solution, and the mixture was kneaded. Additionally, 70 parts by mass of water for adjusting the viscosity was added, and the mixture was kneaded to prepare a negative electrode mixture in slurry form. The negative electrode mixture was applied onto an electrolytic copper foil having a thickness of 10 µm and dried; thereafter, the electrolytic copper foil and the coating were tightly bonded together using a roll press (manufactured by Oono-Roll Corporation) and then subjected to a heat treatment (under reduced pressure at 140°C for 3 hours) to produce a negative electrode. The thickness of the active material layer in the negative electrode was 101 µm, and the capacity density of the negative electrode was 3.0 mAh/cm².

### (Example 2)

A negative electrode was produced as in Example 1, except that instead of the copolymer A, the sodium polyacrylate, and the water, 2.4 parts by mass of the copolymer A, 1.4 parts by mass of sodium polyacrylate (ARON A-20L manufactured by Toagosei Co., Ltd.; concentration: 43% by mass; number average molecular weight: 500,000), and 49.2 parts by mass of water were used. The thickness of the active material layer in the negative electrode was 100 µm, and the capacity density of the negative electrode was 3.0 mAh/cm².

### (Example 3)

A negative electrode was produced as in Example 1, except that instead of the copolymer A, the sodium polyacrylate, and the water, 2.4 parts by mass of the copolymer A, 0.75 part by mass of polyacrylic acid (JURYMER AC-10LHPK manufactured by Toagosei Co., Ltd.; concentration: 40% by mass; number average molecular weight: 250,000), and 96.5 parts by mass of water were used. The thickness of the active material layer in the negative electrode was 101 µm, and the capacity density of the negative electrode was 3.0 mAh/cm².

### (Example 4)

A negative electrode was produced as in Example 1, except that instead of the copolymer A, the sodium polyacrylate, and the water, 1.5 parts by mass of the copolymer A, 3.49 parts by mass of sodium polyacrylate (ARON A-20L manufactured by Toagosei Co., Ltd.; concentration: 43% by mass; number average molecular weight: 500,000), and 48 parts by mass of water were used. The thickness of the active material layer in the negative electrode was 102 µm, and the capacity density of the negative electrode was 3.0 mAh/cm².

### (Comparative Example 1)

A negative electrode was produced as in Example 1, except that instead of the copolymer A, the sodium polyacrylate, and the water, 3 parts by mass of the copolymer A and 50 parts by mass of water only were used. The thickness of the active material layer in the negative electrode was 99 µm, and the capacity density of the negative electrode was 3.0 mAh/cm².

### (Comparative Example 2)

A negative electrode was produced as in Example 1, except that instead of the copolymer A, the sodium polyacrylate, and the water, 6.28 parts by mass of sodium polyacrylate (ARON A-20L manufactured by Toagosei Co., Ltd.; concentration: 43% by mass; number average molecular weight: 500,000) and 46 parts by mass of water were used. The thickness of the active material layer in the negative electrode was 98 µm, and the capacity density of the negative electrode was 3.0 mAh/cm².

### (Peel Test)

A peel strength test was performed on the coating (negative electrode active material layer) on the current collector in each of the negative electrodes obtained in Examples 1 to 4 and Comparative Examples 1 and 2. The negative electrode was cut into a width of 80 mm × 15 mm, and adhesive tape was applied to a surface (negative electrode active material layer-side) of the negative electrode; thereafter, the negative electrode (current collector-side) was fixed to a stainless steel plate by attaching it with double-faced adhesive tape, and used as an evaluation sample. The evaluation sample was subjected to a 180 degree peel test for the negative electrode on the stainless steel plate (180 degree peel test for the adhesive tape on the negative electrode fixed to the stainless steel plate), using a tensile testing machine (compact tabletop tester EZ-Test manufactured by Shimadzu Corporation), and the peel strength between the active material layer and the current collector in the negative electrode was measured. Table 1 shows the evaluation results of the peel test (peel strength).

### (Electrode Strength)

Each of the electrodes obtained in Examples 1 to 4 and Comparative Examples 1 and 2 was cut out into a size of 11 mm in diameter with a punch, and the strength of the electrode (referred to as the "electrode strength") was evaluated based on the presence or absence of peeling, removal, and chipping of the active material layer upon cutting. Table 1 shows the evaluation results of the electrode strength.
O (high strength): out of 10 randomly cut pieces of the electrode, two or less pieces were visually determined to have any of peeling, removal, and chipping of the active material layer.
Δ (somewhat high strength): out of 10 randomly cut pieces of the electrode, three to five pieces were visually determined to have any of peeling, removal, and chipping of the active material layer.
× (poor strength): out of 10 randomly cut pieces of the electrode, six or more pieces were visually determined to have any of peeling, removal, and chipping of the active material layer.

### (Assembly of Battery)

A coin cell (CR2032) including each of the negative electrodes obtained in Examples 1 to 4 and Comparative Examples 1 and 2, and the below-shown counter electrode, separator, and electrolytic solution was produced. The coin cell was subjected to an aging treatment of three cycles at 0.1 C in an environment at 30°C to produce a sample (coin cell).
- Counter electrode: metal lithium
- Separator: glass filter (GA-100 manufactured by Advantec Co., Ltd.)
- Electrolytic solution: a solution obtained by dissolving LiPF₆ at a concentration of 1 mol/L in a solvent prepared by mixing ethylene carbonate (EC) and diethyl carbonate (DEC) at a volume ratio of 1:1, and adding 1% by mass of vinylene carbonate (VC) as an additive for the electrolytic solution

### (Method for Evaluating Direct-Current Resistance)

Each of the coin cells having each of the negative electrodes obtained in Examples 1 to 4 and Comparative Examples 1 and 2, produced as described above, was charged at a rate of 0.2 C, and discharged at a rate of 0.2 C, 0.5 C, 1 C, 3 C, or 5 C, in an environment at 30°C. The cut-off potential was set to 0 to 1.0 V (vs. Li+/Li) for the coin cell. The direct-current resistance (DC-IR) of the cell was calculated based on the obtained I-V characteristics. Table 1 shows the direct-current resistance for each of the examples and comparative examples.

**[Table 1]**

| | Polyacrylic Acid or Sodium Polyacrylate | Copolymer A /Polyacrylic Acid or Sodium Polyacrylate | Peel Strength (N/15 mm) | Electrode Strength | Direct-Current Resistance (Ω) |
|---|---|---|---|---|---|
| Example 1 | Sodium Polyacrylate | 90/10 | 2.7 | ○ | 45 |
| Example 2 | Sodium Polyacrylate | 80/20 | 2.6 | ○ | 41 |
| Example 3 | Polyacrylic Acid | 90/10 | 2.8 | ○ | 42 |
| Example 4 | Sodium Polyacrylate | 50/50 | 2.3 | Δ | 42 |
| Comparative Example 1 | - | 100/0 | 2.8 | ○ | 57 |
| Comparative Example 2 | Sodium Polyacrylate | 0/100 | 1.5 | × | 50 |

## Claims

1. A binder for a nonaqueous electrolyte secondary battery electrode comprising a copolymer of a vinyl alcohol and an alkali metal-neutralized product of ethylenically unsaturated carboxylic acid; and at least one of poly(meth)acrylic acid and an alkali metal-neutralized product of poly(meth)acrylic acid,
wherein a mass ratio of the copolymer to a total mass of the poly(meth)acrylic acid and the alkali metal-neutralized product of poly(meth)acrylic acid is 95/5 to 30/70.

2. The binder for a nonaqueous electrolyte secondary battery electrode according to claim 1, wherein a copolymer composition ratio of the vinyl alcohol to the alkali metal-neutralized product of ethylenically unsaturated carboxylic acid in the copolymer is 95/5 to 5/95 in terms of molar ratio.

3. The binder for a nonaqueous electrolyte secondary battery electrode according to claim 1 or 2, wherein the alkali metal-neutralized product of ethylenically unsaturated carboxylic acid is an alkali metal-neutralized product of (meth)acrylic acid.

4. An electrode mixture for a nonaqueous electrolyte secondary battery comprising an electrode active material, a conductive assistant, and the binder for a nonaqueous electrolyte secondary battery electrode according to any one of claims 1 to 3.

5. The electrode mixture for a nonaqueous electrolyte secondary battery according to claim 4, wherein a content of the binder is 0.5 to 40 parts by mass, based on a total of 100 parts by mass of the electrode active material, the conductive assistant, and the binder.

6. An electrode for a nonaqueous electrolyte secondary battery produced using the electrode mixture for a nonaqueous electrolyte secondary battery according to claim 4 or 5.

7. A nonaqueous electrolyte secondary battery comprising the electrode for a nonaqueous electrolyte secondary battery according to claim 6.

8. An electrical device comprising the nonaqueous electrolyte secondary battery according to claim 7.

9. Use of a binder for a nonaqueous electrolyte secondary battery electrode, the binder comprising a copolymer of a vinyl alcohol and an alkali metal-neutralized product of ethylenically unsaturated carboxylic acid; and at least one of poly(meth)acrylic acid and an alkali metal-neutralized product of poly(meth)acrylic acid,
wherein a mass ratio of the copolymer to a total mass of the poly(meth)acrylic acid and the alkali metal-neutralized product of poly(meth)acrylic acid is 95/5 to 30/70.

## Patentansprüche

1. Bindemittel für eine Elektrode einer Sekundärbatterie mit nichtwässrigem Elektrolyt, umfassend ein Copolymer eines Vinylalkohols und eines Alkalimetall-neutralisierten Produkts von ethylenisch ungesättigter Carbonsäure; und zumindest eines aus Poly(meth)acrylsäure und eines Alkalimetall-neutralisierten Produkts von Poly(meth)acrylsäure,
wobei ein Massenverhältnis des Copolymers zu einer Gesamtmasse der Poly(meth)-acrylsäure und des Alkalimetall-neutralisierten Produkts von Poly(meth)acrylsäure 95/5 bis 30/70 beträgt.

2. Bindemittel für eine Elektrode einer Sekundärbatterie mit nichtwässrigem Elektrolyt nach Anspruch 1, wobei ein Copolymer-Zusammensetzungsverhältnis des Vinylalkohols zu dem Alkalimetall-neutralisierten Produkt von ethylenisch ungesättigter Carbonsäure in dem Copolymer 95/5 bis 5/95 in Bezug auf das Molverhältnis beträgt.

3. Bindemittel für eine Elektrode einer Sekundärbatterie mit nichtwässrigem Elektrolyt nach Anspruch 1 oder 2, wobei das Alkalimetall-neutralisierte Produkt von ethylenisch ungesättigter Carbonsäure ein Alkalimetall-neutralisiertes Produkt von (Meth)acrylsäure ist.

4. Elektrodengemisch für eine Sekundärbatterie mit nichtwässrigem Elektrolyt, umfassend ein aktives Elektrodenmaterial, eine Leitfähigkeitshilfe und ein Bindemittel für eine Elektrode einer Sekundärbatterie mit nichtwässrigem Elektrolyt nach einem der Ansprüche 1 bis 3.

5. Elektrodengemisch für eine Sekundärbatterie mit nichtwässrigem Elektrolyt nach Anspruch 4, wobei ein Gehalt des Bindemittels 0,5 bis 40 Massenteile bezogen auf insgesamt 100 Massenteile des aktiven Elektrodenmaterials, der Leitfähigkeitshilfe und des Bindemittels beträgt.

6. Elektrode für eine Sekundärbatterie mit nichtwässrigem Elektrolyt, die unter Verwendung eines Elektrodengemischs für eine Sekundärbatterie mit nichtwässrigem Elektrolyt nach Anspruch 4 oder 5 hergestellt wurde.

7. Sekundärbatterie mit nichtwässrigem Elektrolyt, umfassend eine Elektrode für eine Sekundärbatterie mit nichtwässrigem Elektrolyt nach Anspruch 6.

8. Elektrische Vorrichtung, umfassend eine Sekundärbatterie mit nichtwässrigem Elektrolyt nach Anspruch 7.

9. Verwendung eines Bindemittels für eine Elektrode einer Sekundärbatterie mit nichtwässrigem Elektrolyt, wobei das Bindemittel ein Copolymer eines Vinylalkohols und eines Alkalimetall-neutralisierten Produkts von ethylenisch ungesättigter Carbonsäure; und zumindest eines aus Poly(meth)acrylsäure und einem Alkalimetall-neutralisierten Produkt von Poly(meth)acrylsäure umfasst,
wobei ein Massenverhältnis des Copolymers zu einer Gesamtmasse der Poly(meth)-acrylsäure und des Alkalimetall-neutralisierten Produkts von Poly(meth)acrylsäure 95/5 bis 30/70 beträgt.

## Revendications

1. Liant pour une électrode de batterie secondaire à électrolyte non aqueux comprenant un copolymère d'un alcool vinylique et d'un produit d'acide carboxylique éthyléniquement insaturé neutralisé par un métal alcalin ; et au moins un parmi de l'acide poly(méth)acrylique et un produit d'acide poly(méth)acrylique neutralisé par un métal alcalin,
dans lequel un rapport massique du copolymère à la masse totale de l'acide poly(méth)acrylique et du produit d'acide poly(méth)acrylique neutralisé par un métal alcalin est de 95/5 à 30/70.

2. Liant pour une électrode de batterie secondaire à électrolyte non aqueux selon la revendication 1, dans lequel un rapport de composition de copolymère de l'alcool vinylique au produit d'acide carboxylique éthyléniquement insaturé neutralisé par un métal alcalin dans le copolymère est de 95/5 à 5/95 en termes de rapport molaire.

3. Liant pour une électrode de batterie secondaire à électrolyte non aqueux selon la revendication 1 ou 2, dans lequel le produit d'acide carboxylique éthyléniquement insaturé neutralisé par un métal alcalin est un produit d'acide (méth)acrylique neutralisé par un métal alcalin.

4. Mélange d'électrode pour une batterie secondaire à électrolyte non aqueux comprenant un matériau actif d'électrode, un assistant conducteur et le liant pour une électrode de batterie secondaire à électrolyte non aqueux selon l'une quelconque des revendications 1 à 3.

5. Mélange d'électrode pour une batterie secondaire à électrolyte non aqueux selon la revendication 4, dans lequel une teneur du liant est de 0,5 à 40 parties en masse, sur la base d'un total de 100 parties en masse du matériau actif d'électrode, de l'assistant conducteur et du liant.

6. Électrode pour une batterie secondaire à électrolyte non aqueux produite en utilisant le mélange d'électrode pour une batterie secondaire à électrolyte non aqueux selon la revendication 4 ou 5.

7. Batterie secondaire à électrolyte non aqueux comprenant l'électrode pour une batterie secondaire à électrolyte non aqueux selon la revendication 6.

8. Dispositif électrique comprenant la batterie secondaire à électrolyte non aqueux selon la revendication 7.

9. Utilisation d'un liant pour une électrode de batterie secondaire à électrolyte non aqueux, le liant comprenant un copolymère d'un alcool vinylique et d'un produit d'acide carboxylique éthyléniquement insaturé neutralisé par un métal alcalin ; et au moins un parmi l'acide poly(méth) acrylique et un produit d'acide poly(méth)acrylique neutralisé par un métal alcalin,
dans lequel un rapport massique du copolymère à la masse totale de l'acide poly(méth)acrylique et du produit d'acide poly(méth)acrylique neutralisé par un métal alcalin est de 95/5 à 30/70.
